# EUROPÄISCHE PATENTSCHRIFT

(11) **EP 2 308 664 B1**
(45) Veröffentlichungstag und Bekanntmachung des Hinweises auf die Patenterteilung: **12.12.2012**
(21) Anmeldenummer: 10013352.9
(22) Anmeldetag: 06.10.2010
(51) Int. Cl.: B29C 45/27

(54) **Einspritzdüse zur Führung von Schmelzemasse**
Injection nozzle for guiding molten masses
Buse d'injection destinée au guidage d'une masse de formage

(30) Priorität: 06.10.2009 DE 102009048368
(43) Veröffentlichungstag der Anmeldung: 13.04.2011
(73) Patentinhaber: HASCO Hasenclever GmbH + Co KG, 58513 Lüdenscheid (DE)
(72) Erfinder: Römhild, Stefan, 58509 Lüdenscheid (DE)
(74) Vertreter: Roche, von Westernhagen & Ehresmann

(56) Entgegenhaltungen:
- DE-U1-202008 005 073
- US-A1- 2009 269 430

## Beschreibung

Die Erfindung betrifft eine Einspritzdüse zur Führung von Schmelzemasse gemäß dem Oberbegriff des Anspruchs 1.

Eine solche Düse ist bekannt aus der EP 1 524 091 B1. Der Düsenkörper der Düse weist eine Ausnehmung sowie bezüglich einer Längsachse der Düse radiale Öffnungen in der Seitenwand der Düse auf, welche in die Öffnung münden. Durch die Ausnehmung sind Düsenspitzen in den Öffnungen montierbar und mittels eines blockartigen Befestigungselements festsetzbar.

In der DE 20 2008 005 073 U1 ist eine Heißkanaldüse für das seitliche Anspritzen von Kunststoffbauteilen beschrieben, die einen Düsenkörper aufweist, an dessen unteren Ende Aussparungen zur Aufnahme von Düsenspitzen ausgebildet sind. Die Aussparungen korrespondieren mit Aussparungen in einem Düsenkörper-Klemmscheibenabschnitt, welcher mittels Befestigungsschrauben an dem Düsenkörper verschraubbar ist, um die Düsenspitzen zwischen dem Düsenkörper und dem Düsenkörper-Klemmscheibenabschnitt zu halten.

Ausgehend von dem letztgenannten Stand der Technik war es Aufgabe der Erfindung, eine Vorrichtung zum seitlichen Anspritzen von Kunststoffbauteilen zu schaffen, bei welcher die Wartung einfacher ist.

Die Aufgabe wird gelöst durch eine Vorrichtung mit den Merkmalen des Anspruchs 1.

Die erfindungsgemäße Vorrichtung umfasst für jede Düsenspitze eine separate Befestigungsvorrichtung. Die Befestigungsvorrichtung umfasst eine Abdeckplatte, mittels welcher jede Düsenspitze separat befestigbar und aus ihrem Sitz lösbar ist.

Mittels der erfindungsgemäßen Vorrichtung kann z.B. im Wartungsfall, jede Düsenspitze einzeln aus ihrem Sitz gelöst werden, ohne dass die anderen Düsenspitzen zugleich gelöst werden.

Eine erste Ausführungsform ist dadurch gekennzeichnet, dass jede Düsenspitze mittels eines separaten Halteelements gehalten ist. Wenn ein Halteelement gelöst wird, bleiben die anderen Halteelemente befestigt und halten die übrigen Düsenspitzen fest in ihrem Lagersitz. Bei einer anschließenden Montage der Düsenspitze muss daher lediglich die Montage und Einstellung einer einzigen Düsenspitze erfolgen.

Wenigstens zwei Halteelemente sind gemäß einer Ausführungsform mittels eines Klemmdeckels an dem Düsenkörper befestigt.

Eine weitere Ausgestaltung der Erfindung ist dadurch gekennzeichnet, dass die Düsenspitzen kreisförmig angeordnet sind und Längsachsen der Düsenspitzen sich in einem gemeinsamen Mittelpunkt schneiden. Die Formhohlräume können dann platzsparend ebenfalls kreisförmig um die Düse herum angeordnet sein.

Die Halteelemente können z.B. ebenfalls kreisförmig angeordnet sein, wobei Längsachsen der Halteelemente sich in einem gemeinsamen Mittelpunkt schneiden. Beispielsweise kann das Halteelement sektorförmig ausgebildet sein.

Gemäß einer alternativen Ausführungsform können die Düsenspitzen und / oder die Halteelemente in wenigstens einer Reihe angeordnet sein. Die Düsenspitzen und / oder die Halteelemente können z.B. entlang einer Achse angeordnet sein. Die Düsenspitzen und / oder die Halteelemente sind z.B. entlang von zwei Achsen ausgerichtet. Einer ersten Achse zugeordnete Düsenspitzen weisen z.B. bezüglich einer zweiten Achse zugeordneten Düsenspitzen einen entgegen gesetzten Schmelzeauslass auf.

Eine Ausgestaltung der Erfindung ist z.B. dadurch gekennzeichnet, dass ein radial innen liegender Endbereich der Halteelemente von einem zentralen Befestigungsmittel gehalten ist. Ein radial außen liegender Endbereich jedes Halteelements ist gemäß einer weiteren Ausführungsform von wenigstens einem Befestigungsmittel gehalten.

Jede Düsenspitze ist z.B. mittels eines Spannelements gegen eine Anschlagfläche des Lagersitzes belastbar. Die Düsenspitze kann z.B. von dem Spannelement radial auswärts belastet sein. Das Spannelement ist z.B. keilförmig ausgebildet. Durch eine Bewegung des Spannelements in eine erste Richtung kann die Düsenspitze in eine zweite Richtung bewegbar sein. Das Spannelement bildet z.B. wenigstens teilweise den Zweigkanal aus.

Gemäß einer Ausgestaltung der Erfindung ist ein Anschlusselement vorgesehen, welches eine Zuführöffnung für den Stammkanal aufweist, wobei das Anschlusselement mit dem Basiskörper eine Ausdehnungsausgleichvorrichtung bildet, mittels welcher Längenänderungen des Basiskörpers ausgleichbar sind. Längenänderungen des Basiskörpers aufgrund von Temperaturschwankungen können auf diese Weise ausgeglichen werden, so dass die an dem Anschlusselement ausgebildete Zuführöffnung relativ zu der Formplatte, in welcher das Anschlusselement aufgenommen ist, ortsfest bleibt.

lnsbesondere weist das Anschlusselement eine Außenfläche auf, welche mit einer Gegenfläche des Basiskörpers einen Schiebesitz bildet. An dem Anschlusselement und / oder dem Basiskörper können Dichtmittel ausgebildet sein.

Gemäß einer anderen Ausführungsform ist die Düsenspitze mittels einer Gewindeverbindung mit dem Halteelement verbunden. Die Düsenspitze ist auf diese Weise leicht an dem Halteelement befestigbar und gemeinsam mit dem Halteelement montierbar. Die Gewindeverbindung kann z.B. unmittelbar zwischen der Düsenspitze und dem Halteelement ausgebildet sein. Alternativ kann z.B. die Düsenspitze zwischen einem Überwurf und dem Halteelement verklemmt sein, wobei die Gewindeverbindung zwischen dem Überwurf und dem Halteelement ausgebildet ist.

Gemäß einer weiteren Ausgestaltung der Erfindung bildet das Halteelement eine Anschlagfläche aus, die mit einer Gegenfläche des Verteilerkörpers zusammenwirkt, um die Position des Halteelements festzulegen. Die Montage des Halteelements wird erleichtert, da durch den Kontakt der Anschlagfläche und der Gegenfläche sichergestellt ist, dass sich das Halteelement in der richtigen Montageposition, z.B. in einem Montagesitz, befindet.

Einer weiteren Ausführungsform gemäß weist das Halteelement eine erste Führungsstruktur auf, die mit einer zweiten Führungsstruktur, die an dem Verteilerkörper ausgebildet ist, zusammenwirkt und eine Führungsvorrichtung bildet, wobei das Halteelement entlang einer Bewegungsbahn geführt ist. Das Halteelement kann z.B. mittels der Führungsvorrichtung z.B. translatorisch geführt sein. Mittels der Führungsvorrichtung kann das Haltelement z.B. in seinen Montagesitz geführt sein.

Weitere Vorteile ergeben sich anhand eines in den Fig. dargestellten Ausführungsbeispiels. Es zeigen:
Fig. 1, eine perspektivische schematische Darstellung der erfindungsgemäßen Einspritzdüse,
Fig. 2, eine schematische Unteransicht der Einspritzdüse gemäß Fig. 1,
Fig. 3, eine Schnittdarstellung der Einspritzdüse gemäß Schnittlinie lll - lll in Fig. 2, wobei ein Basiskörper der Einspritzdüse lediglich teilweise dargestellt ist,
Fig. 4, eine Schnittdarstellung der Einspritzdüse gemäß Schnittlinie lV - IV in Fig. 2, wobei der Basiskörper der Einspritzdüse lediglich teilweise dargestellt ist,
Fig. 5, in Anlehnung an Fig. 1 eine perspektivische Darstellung der Einspritzdüse, wobei ein Haltesektor sowie eine Düsenspitze in Explosionsdarstellung gezeigt sind,
Fig. 6, in Anlehnung an Fig. 1 eine perspektivische Darstellung der Einspritzdüse, wobei zwei Haltesektoren sowie ein Spannelement für die Düsenspitze in Explosionsdarstellung gezeigt sind,
Fig. 7, eine schematische Längsschnittdarstellung der in einer Form eingebauten Einspritzdüse,
Fig. 8, eine Ausschnittdarstellung gemäß Ausschnittlinie Vlll in Fig. 7,
Fig. 9, eine Ausschnittdarstellung gemäß Ausschnittlinie lX in Fig. 7,
Fig. 10, eine perspektivische schematische Darstellung einer zweiten Ausführungsform der erfindungsgemäßen Einspritzdüse,
Fig. 11, eine schematische Längsschnittdarstellung der Einspritzdüse,
Fig. 12, eine vergrößerte schematische Darstellung des Verteilerkörpers gemäß Fig. 11, wobei der Formeinsatz und der Basiskörper nicht dargestellt sind,
Fig. 13, eine schematische Schnittdarstellung gemäß Ausschnittlinie Xlll in Fig. 11,
Fig. 14 eine schematische Unteransicht der Einspritzdüse,
Fig. 15 eine schematische perspektivische Ansicht des Verteilerkörpers, an welchem zwei Haltesektoren montiert sind,
Fig. 16 eine schematische Explosionsdarstellung eines Klemmdeckels mit Schraube,
Fig. 17 eine schematische perspektivische Darstellung eines Haltesektors mit montierter Düsenspitze,
Fig. 18, eine schematische perspektivische Explosionsdarstellung eines Haltesektors, eines Kerns / Torpedos sowie eines Überwurfs,
Fig. 19, eine schematische Seitenansicht des Kerns / Torpedos und des Überwurfs gemäß Fig. 18 in Explosionsdarstellung,
Fig. 20, eine schematische perspektivische Darstellung des Kerns / Torpedos und des Überwurfs gemäß Fig. 19 in Explosionsdarstellung,
Fig. 21, eine schematische perspektivische Explosionsdarstellung eines anderen Ausführungsbeispiels eines Kerns / Torpedos und eines Dichtrings,
Fig. 22, eine schematische perspektivische Darstellung des Kerns / Torpedos und des Dichtrings gemäß Fig. 21 in zusammengebautem Zustand,
Fig. 23, eine schematische perspektivische Darstellung eines anderen Ausführungsbeispiels des Verteilerkörpers sowie der Haltesektoren,
Fig. 24, eine schematische perspektivische Darstellung eines Haltesektors gemäß Fig. 23, und
Fig. 25 eine schematische perspektivische Darstellung eines Klemmdeckels mit Schraube gemäß Fig. 23.

In den Zeichnungen ist eine Einspritzdüse insgesamt mit der Bezugsziffer 10 bezeichnet. Gleiche Bezugszeichen in den unterschiedlichen Fig. bezeichnen auch bei Hinzufügung oder Weglassen von Zusätzen, wie Kleinbuchstaben oder Ziffern, entsprechende Teile.

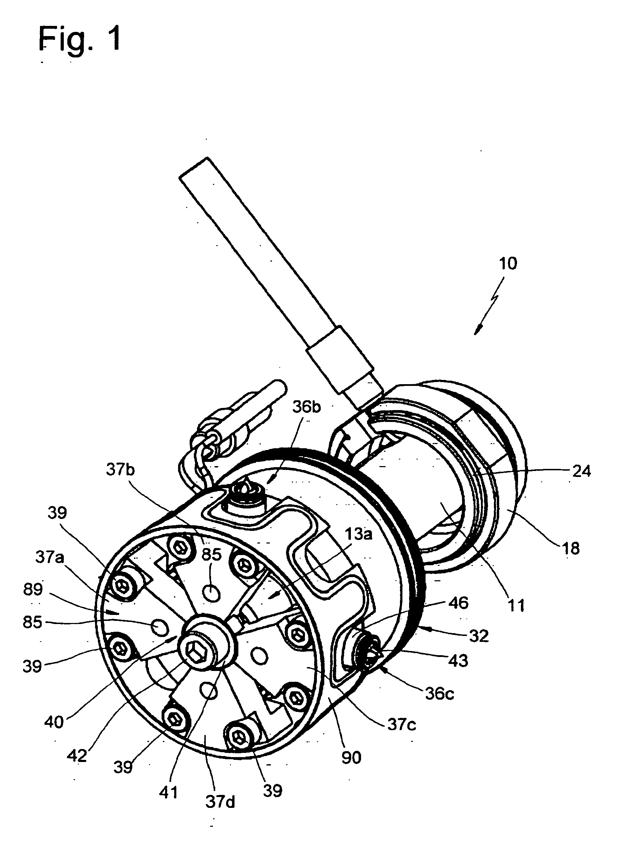

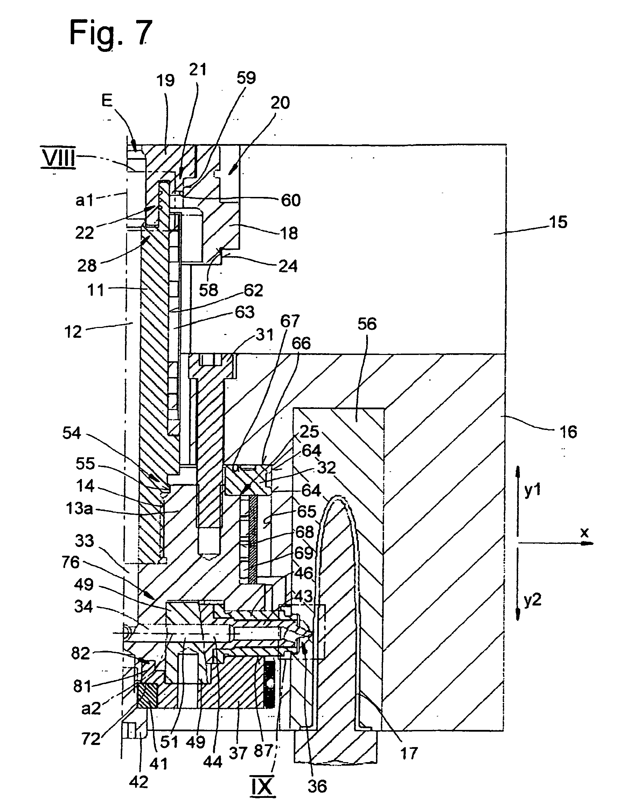

Die Einspritzdüse 10 umfasst z.B. gemäß einem ersten in Fig. 1 dargestellten Ausführungsbeispiel einen Basiskörper 11 sowie einen Verteilerkörper 13a. Der Basiskörper 11 und der Verteilerkörper 13a sind in Aussparungen einer ersten Formplatte 15 sowie einer zweiten Formplatte 16 angeordnet. In der Formplatte 16 sind mehrere Formeinsätze 56 (lediglich in Fig. 7 zu erkennen) im vorliegenden Fall vier Formeinsätze 56, aufgenommen, die jeweils mit einem Formhohlraum 17 versehen sind. In Fig. 1 ist von den vier Formeinsätzen 56 lediglich ein Formeinsatz 56 mit einem Formhohlraum 17 dargestellt.

Mit der Vorrichtung 10 kann die über eine Einlassöffnung E der Vorrichtung 10 zugeführte Schmelze in alle Formhohlräume 17 zugleich eingespritzt werden.

Der Basiskörper 11 ist mittels einer Gewindeverbindung 14 mit dem Verteilerkörper 13a verschraubt. Eine Außenfläche eines Ringsteges 54 des Basiskörpers 11 bildet mit einer Zentrierfläche 55 des Verteilerkörpers 13a eine Zentrierung des Basiskörpers 11.

Ein oberer Endbereich 28 des Basiskörpers 11 ist mittels eines Ringelements 18 sowie eines Deckels 19 zentriert. Das Ringelement 18 ist in einer Aussparung 20 der Formplatte 15 aufgenommen. Das Ringelement 18 umfasst eine Außenfläche 24, welche mit einer Fläche 58 der Formplatte 15 das Ringelement 18 zentrierend zusammenwirkt.

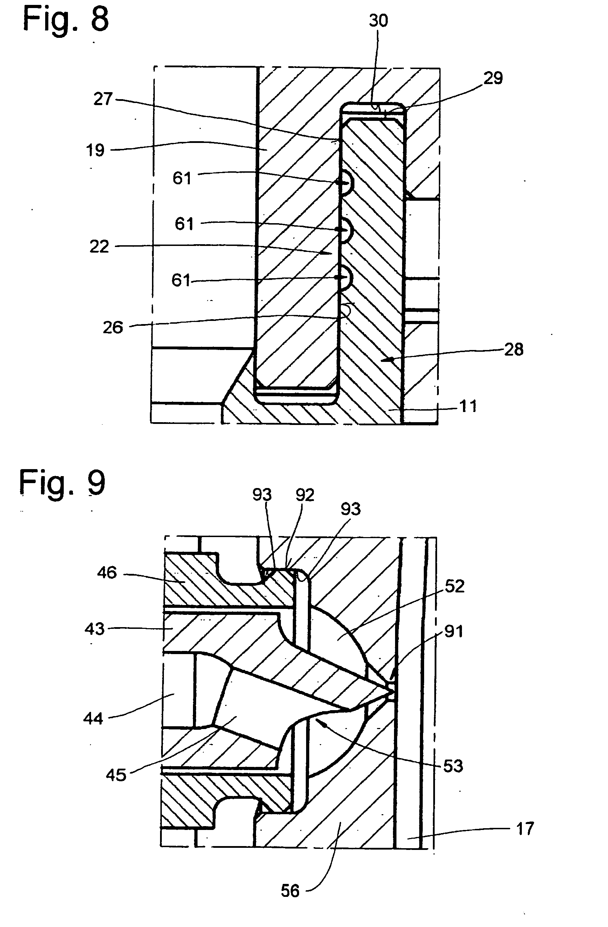

Der Deckel 19 umfasst einen ersten Ringsteg 21 sowie einen zweiten Ringsteg 22. Der Ringsteg 21 des Deckels 19 umfasst eine Außenfläche 59, welche mit einer Außenfläche 60 des Ringelements 18 eine Zentrierung des Deckels 19 bildet. Der Ringsteg 22 des Deckels 19 weist eine Außenfläche 26 auf (siehe Fig. 8), die mit einer Innenfläche 27 des Endbereichs 28 des Basiskörpers 11 zentrierend zusammenwirkt.

Die Außenfläche 26 bildet mit der Innenfläche 27 einen Schiebesitz. Bei einer Längenänderung des Basiskörpers 11 parallel zur Längsmittelachse a1 erfolgt eine Relativbewegung zwischen dem Deckel 19 und dem Basiskörper 11, insbesondere zwischen dem Steg 22 und dem Endbereich 28. Eine Stirnfläche 29 des Endbereichs 28 ist von einer Anschlagfläche 30 des Deckels 19 beabstandet. In jeder Relativposition zwischen dem Steg 22 und dem Endbereich 28 ist der Basiskörper 11 zentriert.

Im Bereich der Innenfläche 27 sind Ringnuten 61 ausgebildet. In den Ringnuten 61 erstarrter Kunststoff bildet eine Dichtung, die verhindert, dass Kunststoff zwischen der Außenfläche 26 und der Innenfläche 27 aus dem Basiskörper 11 heraus gelangen kann. In jeder Relativposition zwischen dem Steg 22 und dem Endbereich 28 ist die Funktion der Dichtung gewährleistet.

Der Vollständigkeit halber sei noch erwähnt, dass an einer Außenfläche 62 des Basiskörpers 11 eine Heizung 63 anliegt, mittels welcher die Temperatur des Basiskörpers 11 konstant gehalten werden kann. Die Heizung 63 wird von einer nicht dargestellten Steuer- und Regelvorrichtung gesteuert.

Der Verteilerkörper 13 ist mit mehreren Schrauben 31, von denen in Fig. 7 lediglich eine Schraube 31 dargestellt ist, an der Formplatte 16 befestigt. Ein Stütz- und Zentrierring 32 ist in einem in dem Verteilerkörper 13a ausgebildeten Lagersitz 25 angeordnet. Außenflächen 64 des Zentrierrings 32 liegen an einer Innenfläche 65 der Formplatte 16 an, stützen den Verteilerkörper 13a radial ab und bilden eine Zentrierung. Eine Außenfläche 66 des Zentrierrings 32 stützt sich an einer Innenfläche 67 der Formplatte 16 ab. An einer Außenfläche 68 des Zentrierrings 32 liegt eine Heizung 69 an, die von der Steuer- und Regelvorrichtung gesteuert wird, um die Temperatur des Verteilerkörpers konstant zu halten. Der Verteilerkörper 13a umfasst ferner eine Heizung 90.

Der Verteilerkörper 13a umfasst einen zentralen Schmelzekanal 33 sowie mehrere, im vorliegenden Fall vier, radial von dem zentralen Schmelzekanal 33 abzweigende Zuführkanäle 34. Der zentrale Schmelzekanal 33 fluchtet mit einem Schmelzekanal 12 des Basiskörpers 11. Der Schmelzekanal 33 erstreckt sich in einen zylindrischen Fortsatz 76 des Verteilerkörpers 13a. In dem Fortsatz verzweigt sich der Schmelzekanal 33 in die vier Zuführkanäle 34, von denen in Fig. 7 lediglich ein Zuführkanal 34 dargestellt ist. Eine Mittelachse a2 jedes Zuführkanals 34 ist etwa rechtwinklig zu der Mittelachse a1 des zentralen Schmelzekanals 12 und des Schmelzekanals 33 ausgebildet.

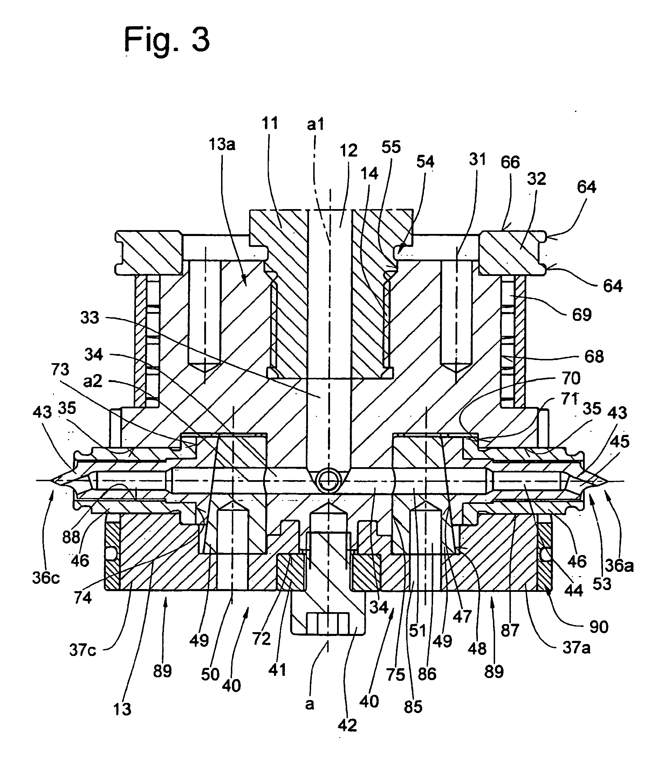

Jeder Zuführkanal 34 leitet die Kunststoffschmelze einer Düsenspitze 36 zu. Der Verteilerkörper 13a umfasst für jede Düsenspitze 36a, 36b. 36c und 36d einen Lagersitz, wobei jeder Lagersitz teilweise von einer Anlagefläche 35 des Verteilerkörpers 13 gebildet ist. An dem Verteilerkörper 13a ist ferner eine Anschlagfläche 70 (z.B. in Fig. 3 zu erkennen) ausgebildet, die ebenfalls einen Teil des Lagersitzes für die Düsenspitze 36 bildet. An der Anschlagfläche 70 liegt eine Ringfläche 71 eines Überwurfs 46 der Düsenspitze 36 an.

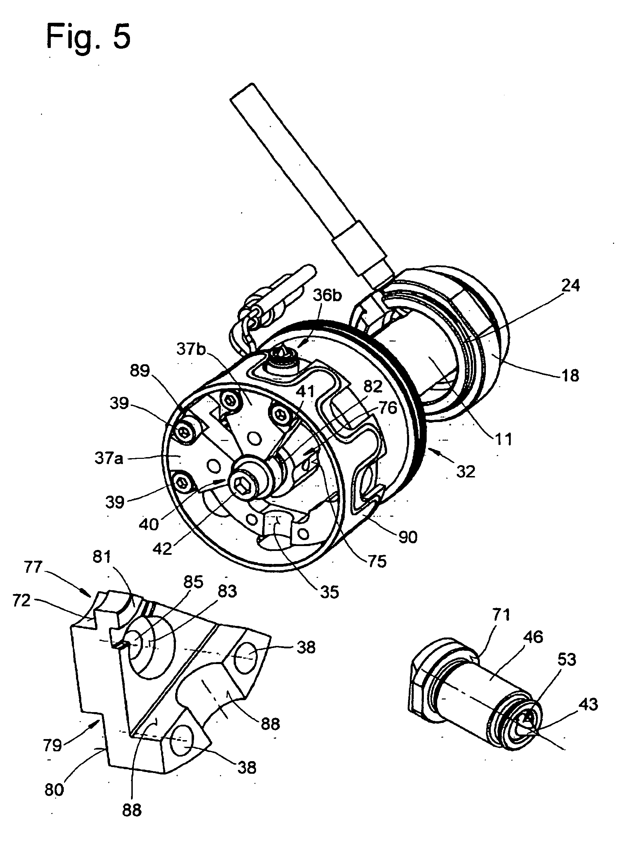

Die Düsenspitze 36 umfasst ferner einen Kern 43, in welchem ein zentraler Schmelzekanal 44 sowie davon radial abzweigende Auslasskanäle 45 ausgebildet sind. Eine Ringfläche 73 des Kerns liegt an einer Ringfläche 74 des Überwurfs 46 an. Der Kern 43 ist mit einer Schrägfläche 47 versehen, die mit einer Schrägfläche 48 eines Spannelements 49 zusammenwirkt. Das Spannelement 49 liegt außerdem an einer Oberfläche 75 des Verteilerkörpers 13a an, die außer in Fig. 3 z.B. in Fig. 5 erkennbar ist.

Die Ringfläche 71 wird in Eingriff mit der Anschlagfläche 70 gehalten durch das Spannelement 49, indem die Schrägfläche 48 des Spannelements 49 eine Kraft in Richtung x auf die Fläche 47 des Kerns 43 ausübt. Der Kern 43 übt eine Kraft in Richtung x auf die Fläche 74 des Überwurfs 46 aus, wodurch die Fläche 71 des Überwurfs 46 an der Anschlagfläche 70 des Verteilerkörpers 13a gehalten ist.

Die Schrägfläche 48 ist zu einer Befestigungsrichtung y geneigt. Das Spannelement 49 kann mittels einer nur schematisch durch eine Symmetrielinie dargestellte Spannschraube 50 in Richtung y1 bewegt werden, bis sie ihren Lagersitz erreicht hat, wobei die Schmelzekanäle 34, 51 und 44 fluchten (Zum Lösen des Spannelements 49 ist das Spannelement 49 mit der Spannschraube 50 auch in die Richtung y2 bewegbar). Die komplementär zu der Schrägfläche 48 geneigte Außenfläche 47 des Kerns 43 der Düsenspitze 36 wirkt mit der Schrägfläche 48 zusammen. Bei der Bewegung des Spannelements 49 in Richtung y kann daher eine Kraft in Richtung x über die Schrägfläche 48 auf die Schrägfläche 47 übertragen werden, wobei die Düsenspitze 36 und der Überwurf 46 in oben dargestellter Weise gegen die Anschlagfläche 70 belastet werden.

Die Befestigung der Düsenspitze 36 in dem Lagersitz erfolgt mittels eines Haltesektors 37, welcher eine Kraft in Richtung y1 ausübt und die Anlagefläche 87 des Überwurfs 46 in Richtung y1 an der Anlagefläche 35 hält. Der Haltesektor 37 weist eine Anlagefläche 88 auf, welcher in Kontakt steht mit einer Anlagefläche 87 des Überwurfs 46. Die Vorrichtung 10 weist für die Düsenspitze 36a einen Haltesektor 37a, für die Düsenspitze 36b einen Haltesektor 37b, für die Düsenspitze 36c einen Haltesektor 37c und für die Düsenspitze 36d einen Haltesektor 37d auf.

In einem Endbereich 89 jedes Haltesektors 37 sind zwei Bohrungen 38 ausgebildet, die von Schrauben 39 durchgriffen sind. Der Schraubenkopf der Schrauben 39 ist in einer Aussparung 79 des Haltesektors 37 angeordnet und liegt an einer Haltefläche 80 des Haltesektors 37 an. Die Schrauben 39 sind in einer Gewindebohrung des Verteilerkörpers 13a verschraubt.

Ein Endbereich 40 des Haltesektors 37 wird mittels einer Halteplatte 41 fest in Richtung y1 an dem Verteilerkörper 13a gehalten, indem die Halteplatte 41 an einer Fläche 72 des Haltesektors 37 anliegt und eine Kraft in Richtung y1 ausübt. Die Fläche 72 ist in einer Aussparung 77 des Haltesektors 37 ausgebildet, in welcher der Kopf einer Schraube 42 aufnehmbar ist. Die Halteplatte 41 ist mittels der Schraube 42 an dem Verteilerkörper 13a befestigt. Ein teilringförmiger Steg 81 des Haltesektors 37 greift in eine Ringnut 82 des Verteilerkörpers 13a. Der Boden 83 einer Bohrung bildet eine Anlagefläche für eine Außenfläche 84 des Spannelements 49. In dem Haltesektor 37 ist eine Bohrung 85 ausgebildet, die von der Spannschraube 50 durchgriffen ist. Die Spannschraube 50 greift in eine Gewindebohrung 86 des Spannelements 49 ein.

Im montierten Zustand gemäß Fig. 1 gelangt die Kunststoffschmelze über den Schmelzekanal 12 des Basiskörpers 11 in den Schmelzekanal 33 des Verteilerkörpers 13a. Der Schmelzekanal 12 fluchtet mit dem Schmelzekanal 33 und ist mit dem Schmelzekanal 33 verbunden. Von dem Schmelzekanal 33 gelangt die Schmelze in die vier Zuführkanäle 34 und fließt anschließend in den in dem Spannelement 49 ausgebildeten Schmelzekanal 51 (abweichend von der Darstellung ist in Fig. 3 das Spannelement 49 ebenfalls mit einem Schmelzekanal 51 versehen).

Von dem Schmelzekanal 51 gelangt die Schmelze in den zentralen Schmelzekanal 44 des Kerns 43 der Düsenspitze 36. Über die Auslasskanäle 45 und eine oder mehrere Auslassöffnungen 53 (siehe Fig. 27) der Düsenspitze 36 fließt die Schmelze in einen kalottenartigen Hohlraum 52, welcher in dem Formeinsatz 56 der Formplatte 16 ausgebildet ist. Der Hohlraum 52 ist durch einen Kanal 91 mit dem Formhohlraum 17 verbunden (siehe Fig. 9). Es sei noch erwähnt, dass der Überwurf 46 mit einer Ringfläche 92 versehen ist, die mit einer Fläche 93 des Formeinsatzes 56 dichtend zusammenwirkt.

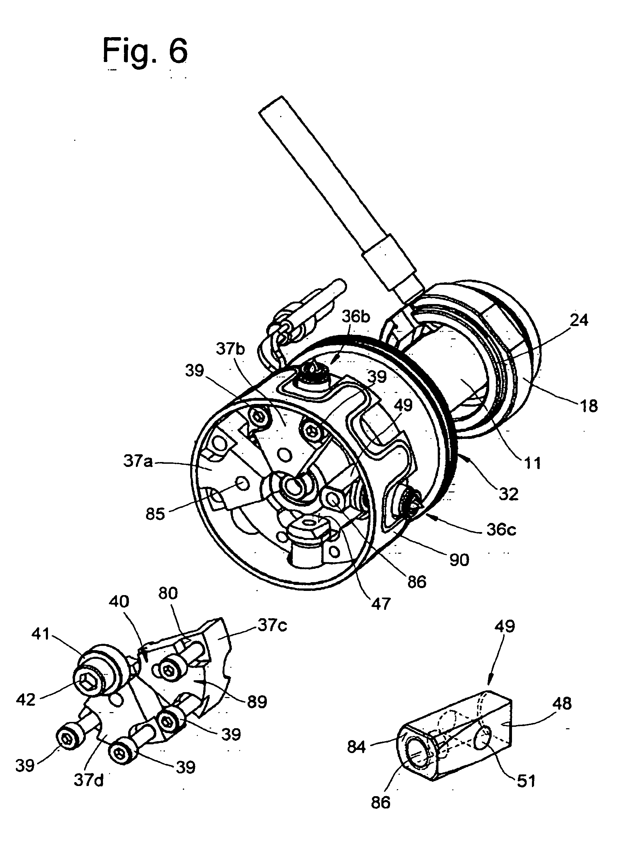

Die Demontage der Düsenspitze 36 erfolgt wie nachfolgend beschrieben. Zunächst wird mittels der Schraube 50 das Spannelement 49 aus seiner Position gelöst. Durch Lösen der zentralen Schraube 42 wird der Endbereich 40 aller Haltesektoren 37a, 37b, 37c und 37d gelöst. Die Haltesektoren 37a, 37b, 37c und 37d werden jedoch von den Schrauben 39 weiterhin fest an dem Verteilerkörper 13a gehalten. Anschließend werden die zwei Schrauben 39 des Haltesektors 37 gelöst, welcher die aus dem Lagersitz zu entfernende Düsenspitze 36 hält (z.B. gemäß Fig. 6 die Haltesektoren 37c und 37d). Die Schrauben 39 der anderen Haltesektoren 37 können befestigt bleiben und die Düsenspitzen 36 fest in ihrem Sitz halten. Die zu lösenden Düsenspitzen 36 können separat aus ihrem Sitz entnommen und z.B. gewartet oder ausgetauscht werden. Anschließend ist eine Befestigung in umgekehrter Reihenfolge möglich.

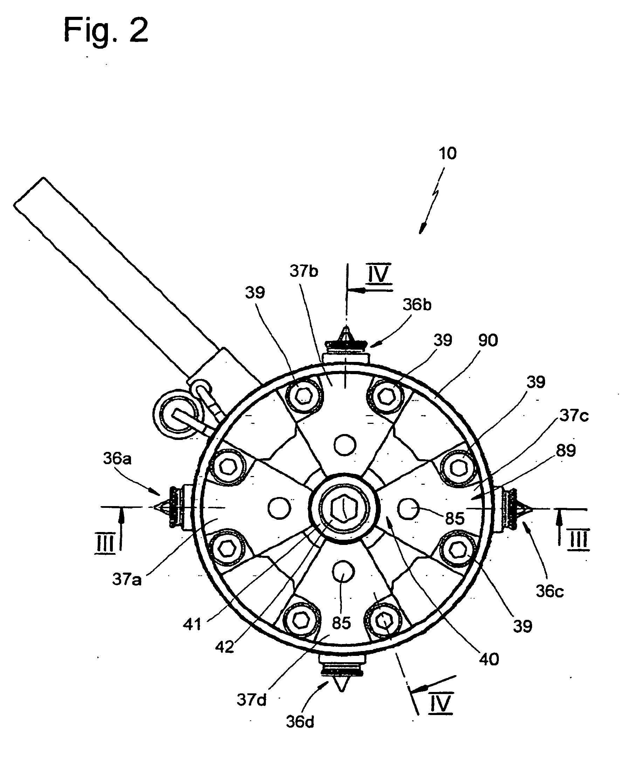

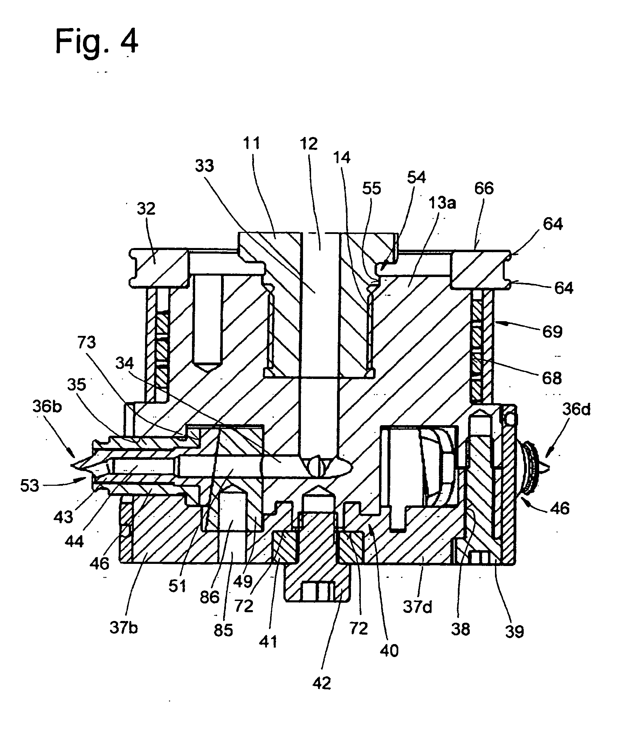

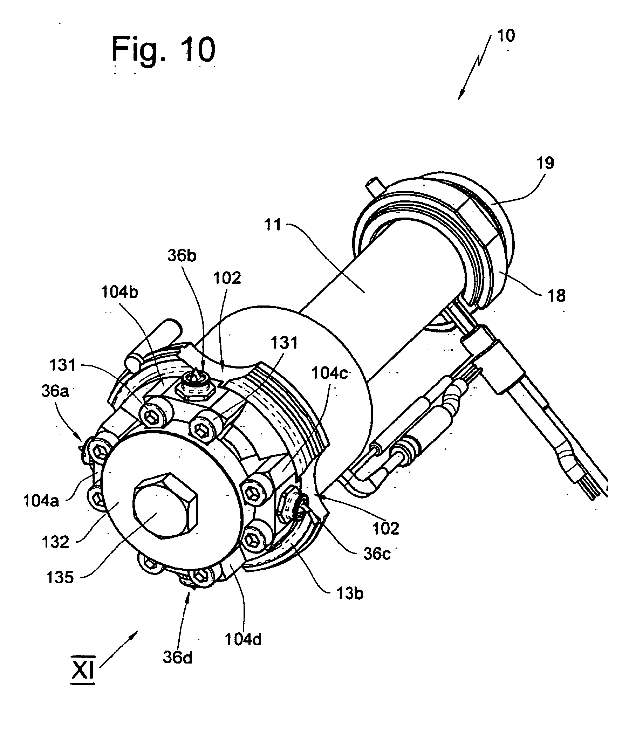

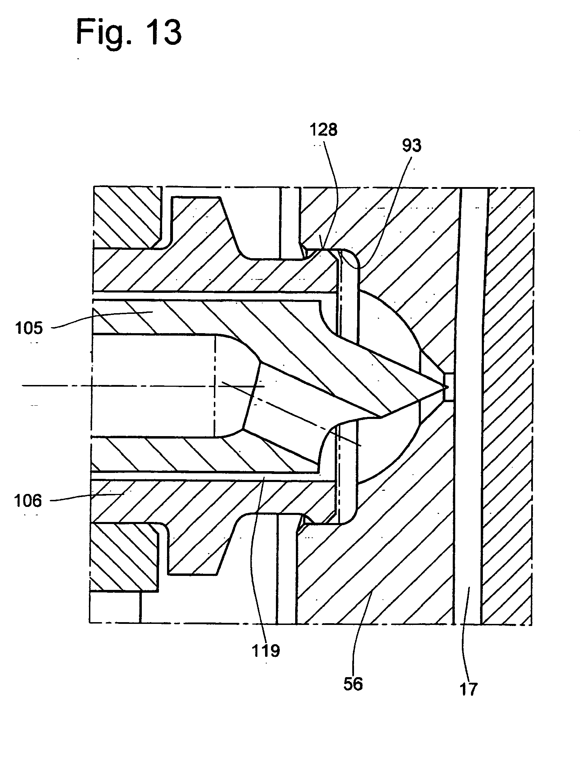

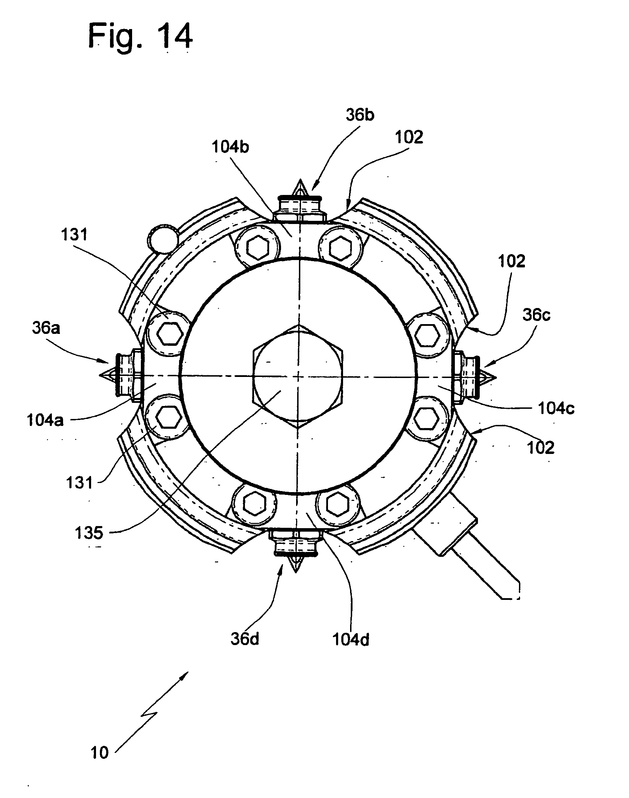

Eine andere Ausführungsform der erfindungsgemäßen Vorrichtung ist in den Fig. 10 bis 22 dargestellt. Der obere Teil der Vorrichtung 10, nämlich der Basiskörper 11 und das Ringelement 18 und der Deckel 19 sind bezüglich des ersten Ausführungsbeispiels gemäß der Fig. 1 bis 9 unverändert ausgebildet. Die Einspritzdüse 10 gemäß dem zweiten Ausführungsbeispiel unterscheidet sich insbesondere bezüglich eines Verteilerkörpers 13b gegenüber dem ersten Ausführungsbeispiel.

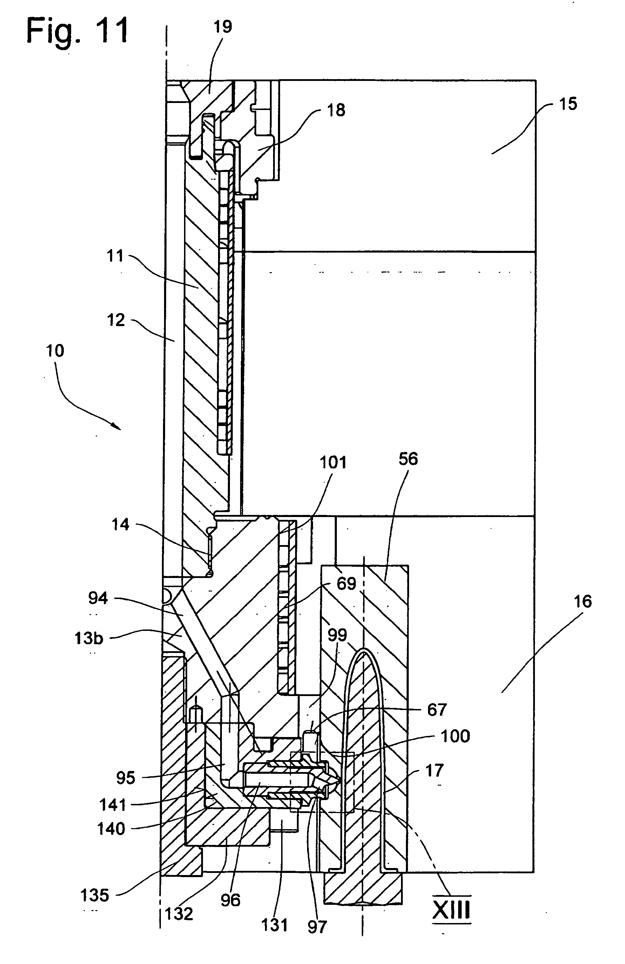

Der Verteilerkörper 13b sitzt gemäß Fig. 11 in der Formplatte 16 und wird mit den Außenflächen 98 zentriert. Die Außenflächen 98 bilden zusammen mit zwischen den Außenflächen 98 angeordneten Freiflächen 157 einen Vielkant, welcher als schmaler Ring ausgebildet ist. Ein Bund 99 des Verteilerkörpers 13b umfasst eine Anlagefläche 100, die an der Innenfläche 67 der Formplatte 16 aufliegt. An einer Außenfläche 101 liegt eine Heizung 69 an, die von der Steuer- und Regelvorrichtung gesteuert wird, um die Temperatur des Verteilerkörpers 13b konstant zuhalten.

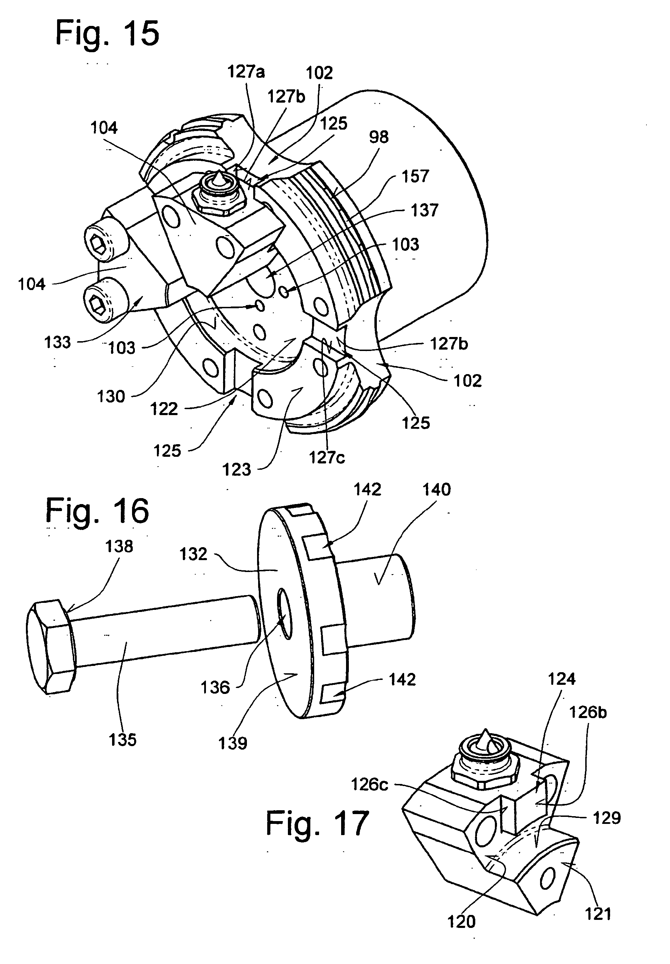

An dem Verteilerkörper 13b sind je nach Anzahl der Formeinsätze 56 Aussparungen 102 ausgebildet (siehe z.B. die Fig. 15), um dem Formeinsatz 56 genügend Platz zu verschaffen.

Eine oder mehrere Zentrierbohrungen 103 sind auf einem Teilkreis angeordnet und dienen zur Positionierung eines Bolzens von einem Demontagewerkzeug, das hier nicht näher beschrieben ist.

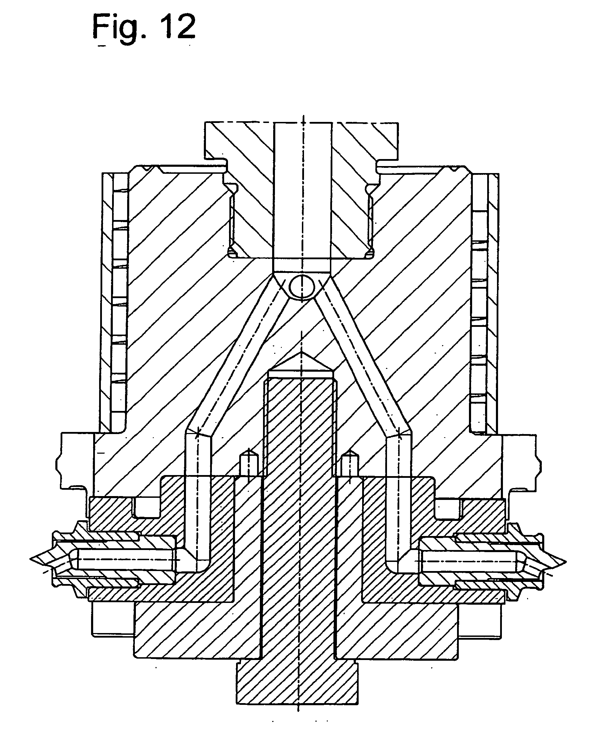

Der Basiskörper 11 ist gemäß Fig. 12 mit dem Verteilerkörper 13b verschraubt. ln dem Verteilerkörper 13b teilt sich der zentrale Schmelzekanal 12 in vier Zuführkanäle 94. Gemäß einer alternativen, nicht dargestellten Ausführungsform können aber auch weniger als vier oder mehr als vier Zuführkanäle in dem Verteilerkörper 13b ausgebildet sein. Jeder Zuführkanal 94 mündet in einen Sektorkanal 95 eines Haltesektors 104. Jeder Sektorkanal 95 mündet in einen Schmelzekanal 96 der in einem Kern 105 ausgebildet ist. Der Schmelzekanal 96 teilt sich in mehrere Auslasskanäle 97, durch welche die Kunststoffschmelze in den kalottenförmigen Hohlraum 52 des Formeinsatzes 56 fließen kann.

Jede Düsenspitze 36a, 36b, 36c, 36d umfasst den Kern 105 sowie einen Überwurf 106. Der Kern 105 wird in dem Haltesektor 104 durch den Kontakt einer Ringfläche 107 des Kerns 105 und einer Zentrierfläche 108 des Haltesektors 105 zentriert und liegt mit einer Stirnfläche 109 auf der Kreisringfläche 110 des Haltesektors 104 auf. Damit der Kern 105 mit dem Haltesektor 104 dichtend verbunden ist, wird er mit dem Überwurf 106 geklemmt, so dass zwischen der Stirnfläche 109 und der Kreisringfläche 110 keine Schmelze hindurchfließen kann.

Ein Außengewinde 111 des Überwurfs 106 und ein Innengewinde 112 des Haltesektors 104 bilden eine Gewindeverbindung, um den Überwurf 106 lösbar mit dem Haltesektor 104 zu verbinden und den Kern 105 zwischen dem Überwurf 106 und dem Haltesektor 37 zu verspannen. Mit einer Zentrierfläche 113 wird der Überwurf 106 bezüglich der Innenfläche 114 des Haltesektors 104, zentriert.

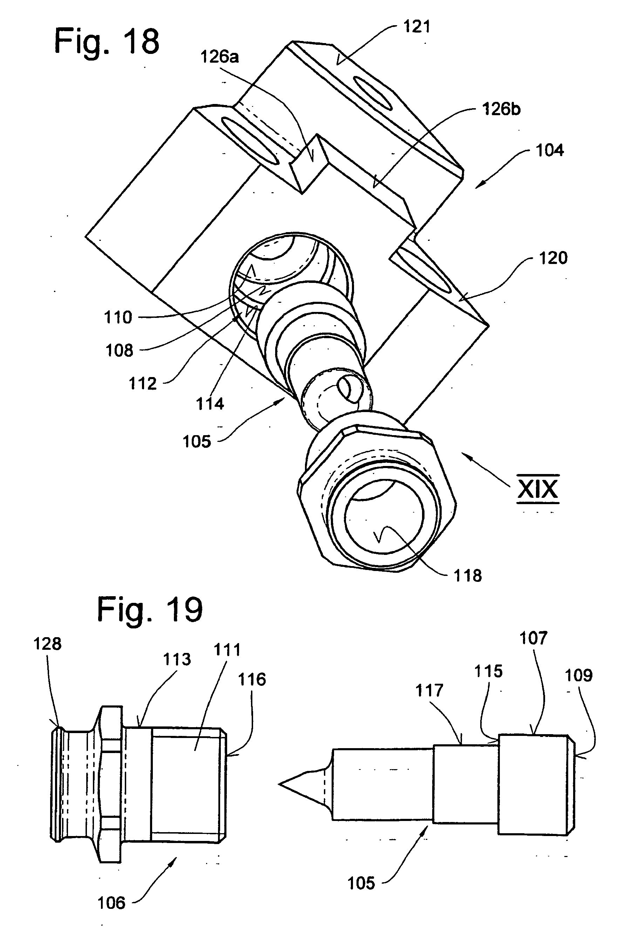

Die Klemmung zwischen dem Kern 105 und dem Überwurf 106 erfolgt, indem die als Kreisringfläche ausgebildete Stirnfläche 116 des Überwurfs 106 (siehe z.B. die Fig. 18 und 19) gegen die Kreisringfläche 115 des Kerns 105 verspannt wird. Die Zentrierung zwischen dem Kern 105 und dem Überwurf 106 erfolgt über eine Außenfläche 117 des Kerns 105 und die Innenfläche 118 des Überwurfs 106.

Der Spalt 119, der zwischen dem Kern 105 und dem Überwurf 106 ausgebildet ist, dient der Isolierung.

Der Haltesektor 104 wird in den Verteilerkörper 13b eingesetzt, so dass die Anlagefläche 121 des Haltesektors 104 auf einem Boden 122 des Verteilerkörpers 13b und eine Anlagefläche 120 des Haltesektors 104 auf einer Anlagefläche 123 des Verteilerkörpers 13b aufliegen. Ein Vorsprung 124 des Haltesektors 104 ist in einer Aussparung 125 des Verteilerkörpers 13b angeordnet. Von dem Vorsprung 124 sind Gleitflächen 126a, 126b, 126c gebildet, die mit Führungsflächen 127a, 127b, 127c eine Führungsvorrichtung bilden.

Durch die Führungsvorrichtung wird verhindert, dass es zwischen der Ringfläche 128 des Überwurfs 106 und der Fläche 93 des Formeinsatzes 56 zu einer Beschädigung kommt, denn bei der Ringfläche 128 handelt es sich um eine Dichtfläche, welche den Überwurf 106 bezüglich dem Formeinsatz 56 abdichtet. Die Abdichtung erfolgt in gleicher Weise wie bei dem ersten Ausführungsbeispiel.

Der Haltesektor 104 wird in Richtung X gegen die Anschlagfläche 130 geschoben. Der Haltesektor 104 befindet sich in einer Endposition in einem Montagesitz, wenn die Anschlagfläche 129 die Gegenfläche 130 kontaktiert. Die Gegenfläche 130 und die Anschlagfläche 129 sind bei dem Ausführungsbeispiel kreisförmig ausgebildet und miteinander konzentrisch, wenn sich der Haltesektor 104 in der Endposition befindet.

Der Haltesektor 104 wird mit dem Verteilerkörper 13b durch 2 Schrauben 131 lösbar verbunden. Die Anlagefläche 121 bildet mit dem Boden 122 eine Abdichtung, wenn der Haltesektor 104 an dem Verteilerkörper 13b montiert ist.

Um jeden Haltesektor 104a, 104b, 104c und 104d durch eine zusätzliche Kraft in Richtung Y1 auch an einem radial inneren Bereich 133 an dem Verteilerkörper 13b zu halten, werden die Haltesektoren 104a, 104b, 104c und 104d durch einen Klemmdeckel 132 geklemmt. Die Anlagefläche 134 des Klemmdeckels 132 liegt auf dem Bereich 133 des Haltesektors 104 auf.

Die Klemmkraft wird durch eine Schraube 135 aufgebracht, welche eine Bohrung 136 des Klemmdeckels 132 durchgreift und in einer Gewindebohrung 137 des Verteilerkörpers 13b lösbar verschraubbar ist. Der Klemmdeckel 132 wird im montierten Zustand zwischen dem Kopf der Schraube 135 und dem Verteilerkörper 13b verspannt. Eine Ringfläche 138 des Kopfes der Schraube 135 liegt auf einer Außenfläche 139 des Klemmdeckels 132 auf.

Die Zentrierfläche 140 des Klemmdeckels 132 hält die Haltesektoren 104 in der Endposition, indem die Zentrierfläche 140 an einer Außenfläche 141 des Haltesektors 104 anliegt.

An dem Klemmdeckel 132 sind Aussparungen 142 für die Schraubenköpfe der Schrauben 131 ausgebildet.

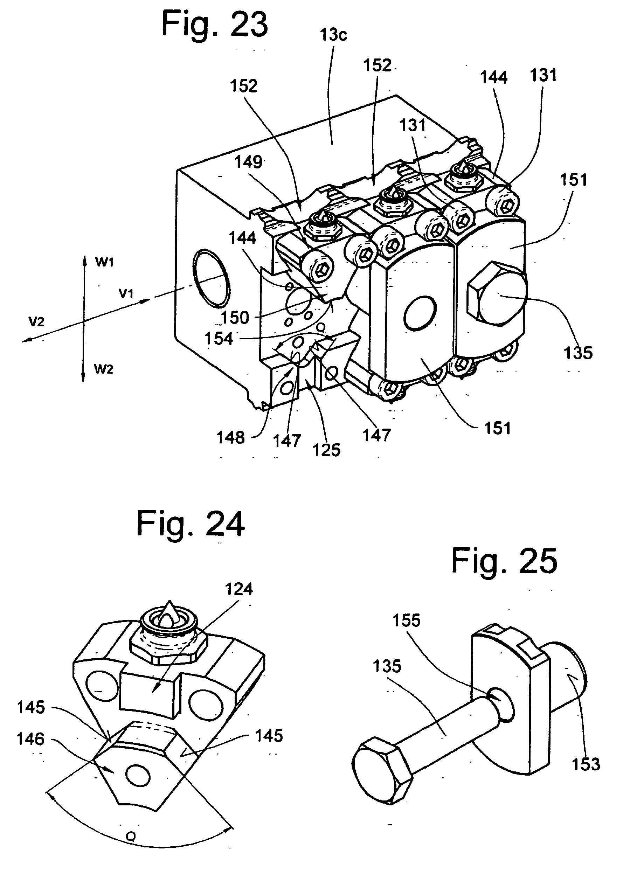

Ein drittes Ausführungsbeispiel (siehe die Fig. 23 bis 25) unterscheidet sich von dem zweiten Ausführungsbeispiel im Wesentlichen dadurch, dass bei der Vorrichtung 10 Haltesektoren 144 linear entlang von zwei zu der Achse V parallelen Achsen an einem Verteilerkörper 13c angeordnet sind. Der Basiskörper 11 ist bei diesem Ausführungsbeispiel wie bei den vorangegangenen Ausführungsbeispielen verschraubt. Anschlagflächen 145 eines Fortsatzes 146 des Haltesektors 144 sind in einem Winkel Q zueinander ausgebildet. Innenflächen 147 eines Sitzes 148 des Verteilerkörpers 13c sind komplementär ausgebildet und stehen ebenfalls in einem Winkel Q zueinander. Die Anschlagflächen 145 dienen der Festlegung einer definierten Position der Haltesektoren 144 bezüglich der Richtungen v1, v2, und w1, w2 in dem Sitz 148.

Auch bei diesem Ausführungsbeispiel ist in gleicher Weise, wie bei dem zweiten Ausführungsbeispiel eine Führungsvorrichtung von einer Aussparung 125 des Verteilerkörpers 13c und einem Vorsprung 124 gebildet.

Die Haltesektoren 144 sind, wie bei dem zweiten Ausführungsbeispiel, an einem äußeren Endbereich 149 mittels Schrauben 131 verschraubt. An einem inneren Endbereich 150 sind jeweils zwei gegenüberliegend angeordnete Haltesektoren 144 mittels eines Klemmdeckels 151 an dem Verteilerkörper 13c befestigt. Jeder Klemmdeckel 151 ist mittels einer Schraube 135 an dem Verteilerkörper 13c gehalten, welche eine Bohrung 155 des Klemmdeckels durchgreift. Der Klemmdeckel 151 umfasst eine zylindrische Zentrierfläche 153, an welcher eine Außenfläche 154 des Haltesektors 144 anliegt.

Wie bei dem zweiten Ausführungsbeispiel ist die Düsenspitze 36 in einer Gewindebohrung des Haltesektors 144 verschraubt.

Für jeden Formeinsatz 56 ist eine Aussparung 152 in dem Verteilerkörper 13c ausgebildet.

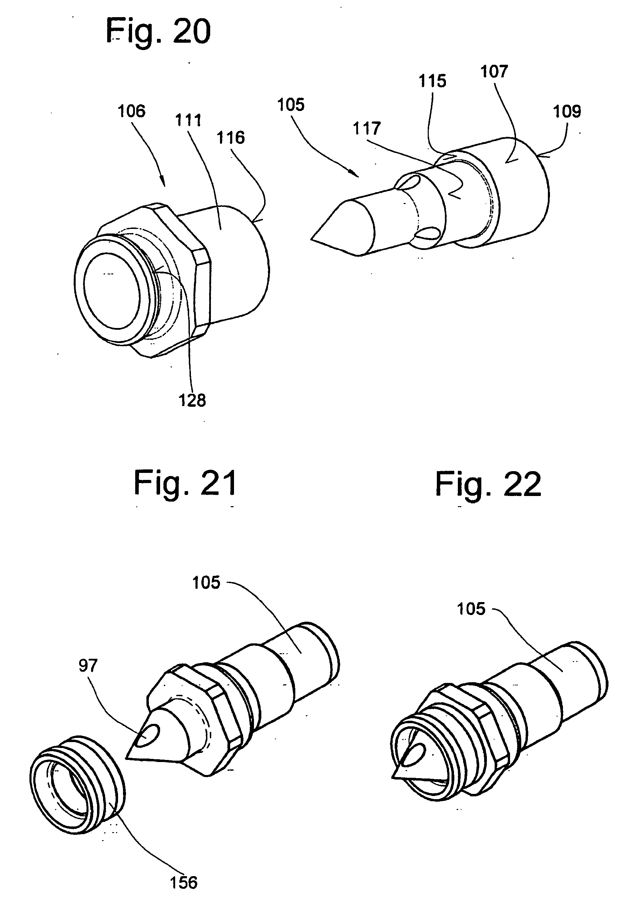

Die Düsenspitze 36 kann in Bezug auf das zweite und dritte dargestellte Ausführungsbeispiel einteilig (siehe die Fig. 21 und 22) oder alternativ auch mehrteilig (siehe z.B. Fig. 20) ausgeführt sein. Bei der einteiligen Düsenspitze 36 ist ein Dichtring 156 z.B. auf dem Kern 105 aufgeschrumpft oder stoffschlüssig durch Kleben, Löten oder Schweißen mit dem Kern 105 verbunden. Der Kern / Torpedo 105 weist ein Gewinde auf und ist an dem Haltesektor 104 bzw. 144 schraubbefestigbar.

Bei der mehrteiligen Düsenspitze 36 weist der Überwurf 106 ein Gewinde auf, so dass der Überwurf 106 in dem Haltesektor 104 bzw. 144 schraubbefestigbar ist. Der Kern / Torpedo 105 wird in diesem Fall zwischen dem Überwurf 106 und dem Haltesektor 104 bzw. 144 geklemmt.

## Patentansprüche

1. Einspritzdüse zur Führung von Schmelzemasse, insbesondere in einer Kunststoffspritzgießform, mit welcher bei einem Spritzgießzyklus mehreren Formhohlräumen (17) Schmelzemasse zuleitbar ist, wobei die Schmelzemasse von einem wenigstens teilweise in dem Düsenkörper (11, 13a, 13b, 13c) ausgebildeten Stammkanal (12, 33) in wenigstens zwei Zweigkanäle (34, 51, 44, 45) leitbar ist, wobei die Zweigkanäle (34, 51, 44, 45) wenigstens teilweise von einer Düsenspitze (36) ausgebildet sind, welche mit einer Austrittsöffnung (53) versehen ist, über welche die Schmelzemasse dem Formhohlraum (17) zuleitbar ist, wobei jede Düsenspitze (36) in einem Lagersitz (35, 70, 130, 148) positionierbar ist und mittels mindestens einem Halteelement (37a, 37b, 37c, 37d, 104a, 104b, 104c, 104d, 144) lösbar an dem Düsenkörper (11, 13a, 13b, 13c) befestigbar ist, **dadurch gekennzeichnet, dass** wenigstens zwei Halteelemente (37a, 37b, 37c, 37d) vorgesehen sind und dass mit jedem Halteelement (37a, 37b, 37c, 37d) wenigstens eine Düsenspitze (36a, 36b, 36c, 36d) befestigbar ist.

2. Einspritzdüse nach Anspruch 1, **dadurch gekennzeichnet, dass** jede Düsenspitze (36) mittels eines separaten Halteelements (37) gehalten ist.

3. Einspritzdüse nach Anspruch 1 oder 2, **dadurch gekennzeichnet, dass** die Düsenspitzen (36a, 36b, 36c, 36d) kreisförmig angeordnet sind und Längsachsen (a₂) der Düsenspitzen (36a, 36b, 36c, 36d) sich in einem gemeinsamen Mittelpunkt schneiden.

4. Einspritzdüse nach einem der Ansprüche 1 bis 3, **dadurch gekennzeichnet, dass** die Halteelemente (37a, 37b, 37c, 37d) kreisförmig angeordnet sind und dass Längsachsen der Halteelemente sich in einem gemeinsamen Mittelpunkt schneiden.

5. Einspritzdüse nach einem der vorangehenden Ansprüche, **dadurch gekennzeichnet, dass** das Halteelement (37a, 37b, 37c, 37d) sektorförmig ausgebildet ist.

6. Einspritzdüse nach einem der vorangehenden Ansprüche, **dadurch gekennzeichnet, dass** ein radial innen liegender Endbereich (40) des Halteelements (37a, 37b, 37c, 37d) von einem zentralen Befestigungsmittel (41, 42) gehalten ist.

7. Einspritzdüse nach einem der vorangehenden Ansprüche, **dadurch gekennzeichnet, dass** ein radial außen liegender Endbereich (89) des Halteelements (37a, 37b, 37c, 37d) von wenigstens einem Befestigungsmittel (39) gehalten ist.

8. Einspritzdüse nach einem der vorangehenden Ansprüche, **dadurch gekennzeichnet, dass** jede Düsenspitze (36a, 36b, 36c, 36d) mittels eines Spannelements (49) gegen eine Anschlagfläche des Lagersitzes belastbar ist.

9. Einspritzdüse nach einem der vorangehenden Ansprüche, **dadurch gekennzeichnet, dass** das Spannelement (49) entlang einer ersten Bewegungsachse (y1) bewegbar ist und dass die Düsenspitze durch die Bewegung des Spannelements (49) in eine zweite Bewegungsrichtung (x) bewegbar ist.

10. Einspritzdüse nach einem der vorangehenden Ansprüche, **dadurch gekennzeichnet, dass** das Spannelement (49) mit einem Schmelzekanal (51) versehen ist und wenigstens teilweise den Zweigkanal (34, 51, 44, 45) ausbildet.

11. Einspritzdüse nach einem der vorangehenden Ansprüche, **dadurch gekennzeichnet, dass** ein Anschlusselement (19) vorgesehen ist, welches eine Zuführöffnung (E) für den Stammkanal (12, 33) aufweist und dass das Anschlusselement (19) mit dem Basiskörper (11) eine Ausdehnungsausgleichvorrichtung bildet, mittels welcher Längenänderungen des Basiskörpers (11) ausgleichbar sind.

12. Einspritzdüse nach einem der vorangehenden Ansprüche, **dadurch gekennzeichnet, dass** das Anschlusselement (19) eine Außenfläche (26) aufweist, welche mit einer Gegenfläche (27) des Basiskörpers (11) einen Schiebesitz bildet, wobei dem Anschlusselement (19) und / oder dem Basiskörper (11) mindestens eine Dichtung (61) zugeordnet ist.

13. Einspritzdüse nach einem der vorangehenden Ansprüche, **dadurch gekennzeichnet, dass** die Düsenspitze (36) mittels einer Gewindeverbindung mit dem Halteelement (37) lösbar verbunden ist.

14. Einspritzdüse nach einem der vorangehenden Ansprüche, **dadurch gekennzeichnet, dass** das Halteelement (37) eine Anschlagfläche (70, 129, 145) ausbildet, die mit einer Gegenfläche (71, 130, 147) des Verteilerkörpers (13a, 13b, 13c) zusammenwirkt, um die Position des Halteelements (37) festzulegen.

15. Einspritzdüse nach einem der vorangehenden Ansprüche, **dadurch gekennzeichnet, dass** das Halteelement (37) eine erste Führungsstruktur (124) aufweist, die mit einer zweiten Führungsstruktur (125), die an dem Verteilerkörper (13b) ausgebildet ist, zusammenwirkt und eine Führungsvorrichtung bildet.

## Claims

1. Injection nozzle for guiding melt mass, in particular in a plastic injection mould, by which melt mass can be fed in an injection moulding cycle to a plurality of mould cavities (17), the melt mass being able to be fed from a stem channel (12, 33), which is at least partially formed in the nozzle body (11, 13a, 13b, 13c), into at least two branch channels (34, 51, 44, 45), the branch channels (34, 51, 44, 45) being at least partially formed by a nozzle tip (36) which is equipped with an outlet opening (53), via which the melt mass can be fed to the mould cavity (17), each nozzle tip (36) being able to be positioned in a bearing seat (35, 70, 130, 148) and detachably fastened to the nozzle body (11, 13a, 13b, 13c) by means of at least one holding element (37a, 37b, 37c, 37d, 104a, 104b, 104c, 104d, 144), **characterised in that** at least two holding elements (37a, 37b, 37c, 37d) are provided and **in that** at least one nozzle tip (36a, 36b, 36c, 36d) can be fastened by each holding element (37a, 37b, 37c, 37d).

2. Injection nozzle according to Claim 1, **characterised in that** each nozzle tip (36) is held by means of a separate holding element (37).

3. Injection nozzle according to Claim 1 or 2, **characterised in that** the nozzle tips (36a, 36b, 36c, 36d) are arranged in the form of a circle and longitudinal axes (a₂) of the nozzle tips (36a, 36b, 36c, 36d) intersect at a common centre point.

4. Injection nozzle according to one of Claims 1 to 3, **characterised in that** the holding elements (37a, 37b, 37c, 37d) are arranged in the form of a circle and **in that** longitudinal axes of the holding elements intersect at a common centre point.

5. Injection nozzle according to one of the preceding claims, **characterised in that** the holding element (37a, 37b, 37c, 37d) is formed in the form of a sector.

6. Injection nozzle according to one of the preceding claims, **characterised in that** a radially internally lying end region (40) of the holding element (37a, 37b, 37c, 37d) is held by a central fastening means (41, 42).

7. Injection nozzle according to one of the preceding claims, **characterised in that** a radially externally lying end region (89) of the holding element (37a, 37b, 37c, 37d) is held by at least one fastening means (39).

8. Injection nozzle according to one of the preceding claims, **characterised in that** each nozzle tip (36a, 36b, 36c, 36d) is loadable by means of a clamping element (49) against a stop surface of the bearing seat.

9. Injection nozzle according to one of the preceding claims, **characterised in that** the clamping element (49) is movable along a first movement axis (y1) and **in that** the nozzle tip is movable, through the movement of the clamping element (49), in a second movement direction (x).

10. Injection nozzle according to one of the preceding claims, **characterised in that** the clamping element (49) is equipped with a melt channel (51) and at least partially forms the branch channel (34, 51, 44, 45).

11. Injection nozzle according to one of the preceding claims, **characterised in that** a connection element (19) is provided, which has a supply opening (E) for the stem channel (12, 33) and **in that** the connection element (19) forms with the base body (11) an expansion compensating device, by means of which changes in length of the base body (11) can be compensated.

12. Injection nozzle according to one of the preceding claims, **characterised in that** the connection element (19) has an external surface (26), which forms a sliding seat with an opposite surface (27) of the base body (11), at least one seal (61) being associated with the connection element (19) and/or the base body (11).

13. Injection nozzle according to one of the preceding claims, **characterised in that** the nozzle tip (36) is detachably connected to the holding element (37) by means of a threaded connection.

14. Injection nozzle according to one of the preceding claims, **characterised in that** the holding element (37) forms a stop surface (70, 129, 145), which cooperates with an opposite surface (71, 130, 147) of the distributor body (13a, 13b, 13c) to fix the position of the holding element (37).

15. Injection nozzle according to one of the preceding claims, **characterised in that** the holding element (37) has a first guide structure (124), which cooperates with a second guide structure (125), formed on the distributor body (13b), and forms a guide device.

## Revendications

1. Buse d'injection pour le guidage de masse fondue, en particulier dans un moule pour moulage par injection de matière plastique, avec laquelle de la masse fondue peut être amenée vers plusieurs espaces creux du moule (17) lors d'un cycle de moulage par injection, la masse fondue pouvant être dirigée d'un conduit principal (12, 33), conçu au moins en partie dans le corps de buse (11, 13a, 13b, 13c), vers au moins deux conduits d'embranchement (34, 51, 44, 45), les conduits d'embranchement (34, 51, 44, 45) étant conçus au moins en partie par une pointe de buse (36), laquelle est munie d'une ouverture de sortie (53), par le biais de laquelle la masse fondue peut être amenée vers l'espace creux du moule (17), chaque pointe de buse (36) pouvant être positionnée dans une chaise de pallier (35, 70, 130, 148) et pouvant être fixée de manière détachable au moyen d'axe au moins d'un élément de maintien (37a, 37b, 37c, 37d, 104a, 104b, 104c, 104d, 144) au niveau du corps de buse (11, 13a, 13b, 13c), **caractérisée en ce qu'**au moins deux éléments de maintien (37a, 37b, 37c, 37d) sont prévus et **en ce qu'**au moins une pointe de buse (36a, 36b, 36c, 36d) peut être fixée avec chaque élément de maintien (37a, 37b, 37c, 37d).

2. Buse d'injection selon la revendication 1, **caractérisée en ce que** chaque pointe de buse (36) est maintenue au moyen d'un élément de maintien (37) séparé.

3. Buse d'injection selon la revendication 1 ou 2, **caractérisée en ce que** les pointes de buse (36a, 36b, 36c, 36d) sont disposées circulairement et **en ce que** des axes longitudinaux (a₂) des pointes de buse (36a, 36b, 36c, 36d) se coupent en un point central commun.

4. Buse d'injection selon l'une des revendications 1 à 3, **caractérisée en ce que** les éléments de maintien (37a, 37b, 37c, 37d) sont disposés circulairement et **en ce que** des axes longitudinaux des éléments de maintien se coupent en un point central commun.

5. Buse d'injection selon l'une des précédentes revendications, **caractérisée en ce que** l'élément de maintien (37a, 37b, 37c, 37d) est conçu en forme de secteur.

6. Buse d'injection selon l'une des précédentes revendications, **caractérisée en ce qu'**une zone d'extrémité (40), placée radialement à l'intérieur, de l'élément de maintien (37a, 37b, 37c, 37d) est maintenue par un moyen de fixation (41, 42) central.

7. Buse d'injection selon l'une des précédentes revendications, **caractérisée en ce qu'**une zone d'extrémité (89), placée radialement à l'extérieur, de l'élément de maintien (37a, 37b, 37c, 37d) est maintenue par au moins un moyen de fixation (39).

8. Buse d'injection selon l'une des précédentes revendications, **caractérisée en ce que** chaque pointe de buse (36a, 36b, 36c, 36d) peut être contrainte au moyen d'un élément de serrage (49) contre une surface de butée de la chaise de pallier.

9. Buse d'injection selon l'une des précédentes revendications, **caractérisée en ce que** l'élément de serrage (49) peut être déplacé le long d'un premier axe de déplacement (y1) et **en ce que** la pointe de buse peut être déplacée par le déplacement de l'élément de serrage (49) dans une deuxième direction de déplacement (x).

10. Buse d'injection selon l'une des précédentes revendications, **caractérisée en ce que** l'élément de serrage (49) est muni d'un conduit de masse fondue (51) et **en ce qu'**au moins, en partie, forme le conduit d'embranchement (34, 51, 44, 45).

11. Buse d'injection selon l'une des précédentes revendications, **caractérisée en ce qu'**un élément de raccordement (19) est prévu, lequel présente une ouverture d'alimentation (E) pour le conduit principal (12, 33) et **en ce que** l'élément de raccordement (19) forme avec le corps de base (11) un dispositif de compensation de dilatation, au moyen duquel des modifications de longueur du corps de base (11) peuvent être compensées.

12. Buse d'injection selon l'une des précédentes revendications, **caractérisée en ce que** l'élément de raccordement (19) présente une surface externe (26), laquelle forme avec une contre-surface (27) du corps de base (11) un siège coulissant, au moins une étanchéité (61) étant affectée à l'élément de raccordement (19) et/ou au corps de base (11).

13. Buse d'injection selon l'une des précédentes revendications, **caractérisée en ce que** la pointe de buse (36) est reliée de manière détachable au moyen d'un raccordement fileté à l'élément de maintien (37).

14. Buse d'injection selon l'une des précédentes revendications, **caractérisée en ce que** l'élément de maintien (37) forme une surface de butée (70, 129, 145) qui concourt avec une contre-surface (71, 130, 147) du corps de distributeur (13a, 13b, 13c) afin de fixer la position de l'élément de maintien (37).

15. Buse d'injection selon l'une des précédentes revendications, **caractérisée en ce que** l'élément de maintien (37) présente une première structure de guidage (124) qui concourt avec une deuxième structure de guidage (125) qui est conçue au niveau du corps de distributeur (13b) et qui forme un dispositif de guidage.
